# EUROPÄISCHE PATENTSCHRIFT

(11) **EP 2 906 812 B1**
(45) Veröffentlichungstag und Bekanntmachung des Hinweises auf die Patenterteilung: **02.11.2016**
(21) Anmeldenummer: 13748335.0
(22) Anmeldetag: 14.08.2013
(51) Int. Cl.: F02M 35/10, F16L 37/098

(54) **KUPPLUNGSEINRICHTUNG FÜR EINE FRISCHLUFTANLAGE**
COUPLING DEVICE FOR A FRESH AIR SYSTEM
DISPOSITIF DE RACCORDEMENT DESTINÉ À UN SYSTÈME D'ALIMENTATION EN AIR FRAIS

(30) Priorität: 10.10.2012 DE 102012218480
(43) Veröffentlichungstag der Anmeldung: 19.08.2015
(73) Patentinhaber: Mahle International GmbH, 70376 Stuttgart (DE)
(72) Erfinder: KOHLER, Samuel, 71093 Weil im Schönbuch (DE)
(74) Vertreter: BRP Renaud & Partner mbB Rechtsanwälte Patentanwälte Steuerberater
(86) Internationale Anmeldenummer: PCT/EP2013/067017
(87) Internationale Veröffentlichungsnummer: WO 2014/056652

(56) Entgegenhaltungen:
- EP-A1- 1 207 295
- EP-A2- 1 835 144
- AT-A4- 508 669
- DE-A1-102009 057 867

## Beschreibung

Die vorliegende Erfindung betrifft eine Kupplungseinrichtung zur Verbindung von Luftleitungen einer Frischluftanlage für eine Brennkraftmaschine, insbesondere eines Kraftfahrzeugs. Die Erfindung betrifft außerdem eine Frischluftanlage für eine Brennkraftmaschine, insbesondere eines Kraftfahrzeugs, die mit wenigstens einer derartigen Kupplungseinrichtung ausgestattet ist.

Eine Frischluftanlage zur Versorgung einer Brennkraftmaschine mit Frischluft erstreckt sich in üblicher Weise von einer Lufteintrittsöffnung bis zu einem Frischluftverteiler, der in der Regel für mehrere Zylinder der Brennkraftmaschine separate Austrittsöffnungen besitzt. Eine derartige Frischluftanlage umfasst in der Regel mehrere Luft leitende Komponenten oder Luftleitungen, wie zum Beispiel ein Luftfilter und ein Saugmodul sowie diverse Verbindungsleitungen zum Führen der Luft. Das Saugmodul kann den vorstehend genannten Luftverteiler enthalten. Ebenso kann ein derartiges Saugmodul Resonanzeinrichtungen und dergleichen beinhalten. Bei aufgeladenen Brennkraftmaschinen enthält die Frischluftanlage außerdem eine Ladeeinrichtung, vorzugsweise einen Verdichter eines Abgasturboladers, sowie einen Ladeluftkühler. Die einzelnen Komponenten müssen miteinander verbunden werden, um die Frischluft vom Einlass zu den Auslässen führen zu können. Beim Zusammenbau der Frischluftanlage sind aneinander anschließende Komponenten fluidisch miteinander zu verbinden. Hierbei kann unter anderem eine Kupplungseinrichtung der vorstehend genannten Art zur Anwendung kommen. Insbesondere in einem Fahrzeug steht häufig nur wenig Einbauraum zur Unterbringung der Frischluftanlage zur Verfügung, wodurch sich auch die Montage der einzelnen Komponenten der Frischluftanlage erschwert. Insbesondere können dabei Situationen auftreten, bei denen eine Verdrehung der miteinander zu verbindenden Komponenten in einer Umfangsrichtung nicht oder nur in sehr kleinen Winkeln möglich ist. In diesen Fällen ist eine Montage häufig nur in axialer Richtung möglich. Erwünscht ist auch eine einfache Montierbarkeit bei reduzierter Zugänglichkeit und reduzierter Einsehbarkeit der Montagestelle. Ferner muss eine derartige Kupplungseinrichtung eine lösbare Verbindung der beteiligten Komponenten ermöglichen, zum Beispiel für Wartungszwecke. Auch das Lösen der Kupplungseinrichtung muss dann möglichst einfach realisierbar sein. Eine Kupplungseinrichtung der vorstehend beschriebenen Art soll sich daher dadurch auszeichnen, dass sie möglichst einfach verbindbar und lösbar ist, wozu im Wesentlichen nur axiale Relativbewegungen der miteinander zu verbindenden Komponenten bzw. der voneinander zu trennenden Komponenten erforderlich sein sollen.

Beispiele für Kupplungseinrichtungen sind in der DE 10 2009 057867 A1 oder der AT 508 669 A4 offenbart.

Die vorliegende Erfindung beschäftigt sich mit dem Problem, für eine derartige Kupplungseinrichtung eine verbesserte Ausführungsform anzugeben, die sich insbesondere durch eine einfache Handhabung und/oder durch eine preiswerte Herstellbarkeit auszeichnet.

Dieses Problem wird bei der vorliegenden Erfindung durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Kupplungseinrichtung mit einem Anschluss und mit einem in den Anschluss axial einsteckbaren Stutzen auszustatten, wodurch zum einen eine Steckverbindung realisiert wird. Zum anderen wird eine lösbare Verrastung zwischen Anschluss und Stutzen bereitgestellt. Hierzu ist am Anschluss ein Rastring angeordnet, der zumindest zwischen einer Sicherungsstellung und einer Entsicherungsstellung in der Umfangsrichtung verstellbar ist. Dieser Rastring ist mit wenigstens einem Rastelement ausgestattet, das radial federelastisch am Rastring angeordnet ist. Vorzugsweise sind am Rastring jedoch mehrere derartige Rastelemente vorgesehen, die in der Umfangsrichtung verteilt angeordnet sind. Der Anschluss ist ferner mit einem Sicherungsring ausgestattet, der mit dem jeweiligen Rastelement zur axialen Fixierung des Rastrings am Anschluss zusammenwirkt. Der Stutzen weist an seiner Außenseite eine Sicherungsnut auf, in welche das jeweilige Rastelement radial eingreifen kann, wenn der Stutzen in den Anschluss eingesteckt ist und wenn der Rastring seine Sicherungsstellung einnimmt. In diesem Fall ist der Stutzen durch das jeweilige, in die Sicherungsnut eingreifende Rastelement mechanisch, durch Formschluss gegen ein unbeabsichtigtes Herausziehen des Stutzens aus dem Anschluss gesichert. Die Sicherungsnut kann umlaufend ausgebildet sein oder durch am Umfang verteilt angeordnete Nut-Segmente gebildet sein. Die hier vorgestellte Kupplungseinrichtung lässt sich besonders einfach verbinden und trennen, da sie als axiale Steckverbindung mit lösbarer Rastverbindung konzipiert ist. Die axial steckbaren Komponenten, also der Anschluss und der Stutzen können auf geeignete Weise an den miteinander zu verbindenden Komponenten der Frischluftanlage angebracht bzw. angeordnet sein. Dabei können der Anschluss bzw. der Stutzen in Form separater Bauteile an die jeweilige Komponente angebaut sein. Ebenso ist eine integrale Ausbildung bzw. Ausformung des Anschlusses bzw. des Stutzens an der jeweiligen Komponente der Frischluftanlage denkbar. Beispielsweise kann eine Luftleitung an einem Ende als Stutzen oder als Anschluss ausgeformt sein. Der drehbar am Anschluss angeordnete Rastring lässt sich manuell einfach betätigen, um ihn zwischen der Sicherungsstellung und der Entsicherungsstellung zu überführen. Dies kann insbesondere blind erfolgen, was beispielsweise die Demontage, also das Lösen der Kupplungseinrichtung erleichtert.

Entsprechend einer vorteilhaften Ausführungsform kann das jeweilige Rastelement einen Federbereich und eine Rastnase aufweisen, wobei die Rastnase im eingesteckten Zustand des Stutzens und in der Sicherungsstellung des Rastrings in die Sicherungsnut eingreift und über den Federbereich radial federelastisch am Rastring angeordnet ist. Die Federelastizität der Rastelemente wird somit nicht innerhalb des Rastrings bereitgestellt, sondern innerhalb der Rastelemente über besagten Federbereich. Hierdurch kann der übrige Rastring vergleichsweise einfach und somit preiswert hergestellt werden. Weiterhin vereinfacht sich die Verteilung mehrerer Rastelemente entlang der Umfangsrichtung am Rastring.

Bei einer anderen Ausführungsform kann der Anschluss wenigstens einen Rampenbereich aufweisen, der beim Verstellen des Rastrings von der Sicherungsstellung in die Entsicherungsstellung mit dem jeweiligen Rastelement zusammenwirkt, derart, dass der jeweilige Rampenbereich das jeweilige Rastelement radial nach außen verdrängt, so dass der Stutzen in der Entsicherungsstellung des Rastrings vom jeweiligen Rastelement freikommt und axial aus dem Anschluss herausziehbar ist. Beim Verdrehen des Rastrings in die Entsicherungsstellung bewirkt der jeweilige Rampenbereich somit ein Herausziehen des jeweiligen Rastelements aus der Sicherungsnut. Hierdurch wird das Lösen der Kupplungseinrichtung extrem vereinfacht. Sofern am Rastring mehrere Rastelemente vorgesehen sind, was vorzugsweise der Fall ist, sind auch mehrere Rampenbereiche vorgesehen, nämlich je Rastelement ein zugehöriger Rampenbereich.

Bei einer anderen Ausführungsform kann der Anschluss wenigstens ein radiales Rastfenster aufweisen, welches axial vom Sicherungsring begrenzt ist und in welches das jeweilige Rastelement radial eingreift. Durch das jeweilige Rastfenster kann dann das jeweilige Rastelement im eingesteckten Zustand des Stutzens und in der Sicherungsstellung des Rastrings in die Sicherungsnut eingreifen. Zweckmäßig ist je Rastelement genau ein derartiges Rastfenster vorgesehen, so dass bei mehreren Rastelementen jedem Rastelement ein separates Rastfenster zugeordnet ist. Zweckmäßig kann der zuvor genannte Rampenbereich das jeweilige Rastfenster in derjenigen Drehrichtung begrenzen, die den Rastring in die Entsicherungsstellung überführt. Durch das jeweilige Rastfenster ergibt sich eine mechanische und formschlüssige axiale Fixierung des jeweiligen Rastelements am Sicherungsring und somit des gesamten Rastrings am Anschluss. Im Verbindungszustand ist somit der Stutzen über das jeweilige Rastelement formschlüssig am Anschluss axial fixiert.

Bei einer anderen Ausführungsform kann der Stutzen eine Rampenkontur aufweisen, die beim Einstecken des Stutzens der Sicherungsnut vorausgeht und mit dem jeweiligen Rastelement zusammenwirkt, derart, dass die Rampenkontur beim Einstecken des Stutzens das jeweilige Rastelement radial nach außen verdrängt, wenn der Rastring in seine Sicherungsstellung verstellt ist. Durch diese Bauform wird erreicht, dass der Stutzen zum Herstellen der Verbindung auch dann axial in den Anschluss eingesteckt werden kann, wenn der Rastring in seine Sicherungsstellung verstellt ist. Ferner bewirkt diese Bauform, dass der Stutzen beim Einstecken in den Anschluss bei Erreichen einer vorbestimmten Einstecktiefe automatisch mit dem Anschluss verrastet, da bei dieser vorbestimmten Einstecktiefe die Rastelemente radial zur Sicherungsnut fluchten und durch ihre Federkraft angetrieben darin eingreifen.

Gemäß einer anderen vorteilhaften Ausführungsform kann der Rastring ein radial abstehendes, manuell greifbares Antriebselement aufweisen, während gleichzeitig der Anschluss ein radial abstehendes, manuell greifbares Widerlagerelement besitzt. Zweckmäßig können nun das Antriebselement und das Widerlagerelement benachbart zueinander angeordnet sein, also relativ nahe beieinander positioniert sein. Ferner ist zweckmäßig vorgesehen, dass das Antriebselement und das Widerlagerelement zumindest in der Schließstellung des Rastrings in der Umfangsrichtung zueinander versetzt angeordnet sind, und zwar so, dass sie zum Verstellen des Rastrings in die Entsicherungsstellung aufeinander zu bewegt werden müssen. Durch diese Bauform lässt sich der Rastring relativ einfach handhaben, um ihn in die Entsicherungsstellung zu überführen. Insbesondere kann der Rastring mit einer Hand in die Entsicherungsstellung gebracht werden. Zweckmäßig erfolgen die Anordnung von Antriebselement und Widerlagerelement in der Sicherungsstellung einerseits sowie deren Formgebung andererseits derart, dass sie eine Zwei-Finger-Betätigung ermöglichen, um den Rastring in seine Entsicherungsstellung zu verstellen. Beispielsweise lässt sich das Antriebselement mit einem Daumen antreiben, während gleichzeitig das Widerlagerelement mit einem Zeigefinger gehalten werden kann. Um nun den Rastring in seine Entsicherungsstellung zu verdrehen, muss der Monteur nur seinen Daumen in Richtung Zeigefinger bewegen. Dies lässt sich insbesondere auch an einer schwer zugänglichen Stelle und quasi blind bewerkstelligen.

Bei einer anderen Ausführungsform kann der Rastring einen bandförmigen Ringkörper aufweisen, der quer zur Umfangsrichtung einen flachen Querschnitt aufweist und an dem das jeweilige Rastelement federelastisch angeordnet ist. Ein derartiger Ringkörper ist bei entsprechender Materialauswahl, vorzugsweise Kunststoff, aufgrund seines flachen Querschnitts flexibel bzw. elastisch. Auf diese Weise ist es beispielsweise möglich, für den Anschluss und den Stutzen einen durchströmbaren Querschnitt vorzusehen, der von einer Kreisform abweicht. Bevorzugt sind dabei runde Querschnitte, wie ovale Querschnitte, elliptische Querschnitte und eiförmige Querschnitte. Durch den elastischen Ringkörper kann der Rastring auch bei nicht kreisförmigen Querschnitten relativ zum Anschluss verdreht werden, um ihn zwischen der Sicherungsstellung und der Entsicherungsstellung verstellen zu können. Das jeweilige Rastelement schließt dabei seitlich, also axial an den Ringkörper an, wodurch die Elastizität des Ringkörpers nicht oder nur sehr gering beeinträchtigt ist.

Bei einer anderen Ausführungsform kann der Anschluss an seiner Außenseite wenigstens einen Verdrehanschlag aufweisen, der mit einer am Rastring ausgebildeten Aufnahme zum Begrenzen der Verstellbarkeit des Rastrings zwischen der Sicherungsstellung und der Entsicherungsstellung zusammenwirkt. Hierdurch wird für den Anwender haptisch das Erreichen der jeweiligen Stellung signalisiert.

Gemäß einer anderen besonders vorteilhaften Ausführungsform kann der Anschluss ein separates Sicherungsbauteil aufweisen, das an einen Grundkörper des Anschlusses angebaut ist und das den Sicherungsring aufweist. Im Unterschied zu einer einstückigen, integralen Bauform lässt sich diese zweiteilige Bauform des Anschlusses leichter mittels Spritzformwerkzeugen herstellen, wodurch eine preiswerte Herstellung des Anschlusses und des Sicherungsbauteils aus Kunststoff möglich ist. Ferner ist es grundsätzlich möglich, das Sicherungsbauteil und den Anschluss aus unterschiedlichen Materialien, insbesondere aus unterschiedlichen Kunststoffen, herzustellen, um unterschiedliche Materialanforderungen abdecken zu können.

Entsprechend vorteilhaften Weiterbildungen kann das separate Sicherungsbauteil mehr oder weniger komplex ausgestaltet sein. Es weist zumindest den Sicherungsring auf. Optional kann es auch den jeweiligen Rampenbereich aufweisen. Zusätzlich oder alternativ kann das Sicherungsbauteil auch das jeweilige Rastfenster aufweisen. Zusätzlich oder alternativ kann das Sicherungsbauteil auch das Widerlagerelement aufweisen. Zusätzlich oder alternativ kann das Sicherungsbauteil auch den Verdrehanschlag aufweisen.

Entsprechend einer anderen vorteilhaften Weiterbildung kann der Anschluss radial innen eine Dichtungsaufnahme aufweisen, die eine den eingesteckten Stutzen radial gegenüber dem Anschluss dichtende Radialdichtung aufnimmt. Diese Dichtungsaufnahme kann nun radial und axial einerseits durch eine am Grundkörper ausgeformte Ringstufe begrenzt sein. Des Weiteren kann diese Dichtungsaufnahme axial andererseits durch eine axiale Stirnseite des vorgenannten Sicherungsbauteils begrenzt sein. Hierdurch lässt sich die Dichtungsaufnahme hinterschnittfrei spritzformen, da die sich hinterschneidenden Konturen an verschiedenen Komponenten, nämlich einerseits am Grundkörper und andererseits am Sicherungsbauteil ausgeformt sind. Gleichzeitig vereinfacht sich dadurch das Einbringen der jeweiligen Radialdichtung, die als O-Ringdichtung oder als Y-Ringdichtung oder als X-Ringdichtung konzipiert sein kann.

Bei einer anderen vorteilhaften Weiterbildung kann das Sicherungsbauteil wenigstens einen radial federnden Schnapphaken aufweisen, der im angebauten Zustand in ein am Grundkörper ausgebildetes Schnappfenster radial nach außen eingreift. Somit lässt sich das Sicherungsbauteil ohne zusätzliche, separate Befestigungsmittel am Grundkörper fixieren. Zweckmäßig sind mehrere derartige Schnapphaken vorgesehen, die in der Umfangsrichtung verteilt angeordnet sind. Zweckmäßig ist dann für jeden Schnapphaken ein separates Schnappfenster vorgesehen.

Bei einer anderen Weiterbildung kann der Grundkörper für den jeweiligen Schnapphaken eine Einführschräge aufweisen, die beim axialen Stecken des Sicherungsbauteils den jeweiligen Schnapphaken radial nach innen verdrängt, wodurch das Anbauen des Sicherungsbauteils an den Grundkörper erheblich vereinfacht wird. Zweckmäßig kann nun die jeweilige Einführschräge relativ zum zugehörigen Schnappfenster in der Umfangsrichtung versetzt angeordnet sein. In der Folge muss das Sicherungsbauteil beim Anbauen an den Grundkörper zunächst axial gesteckt und anschließend in der Umfangsrichtung gedreht werden, bis der jeweilige Schnapphaken in das zugehörige Schnappfenster radial einrasten kann. Diese Bauform hat den Vorteil, dass ein Rand, der das jeweilige Schnappfenster in der Auszugsrichtung des Sicherungsbauteils axial begrenzt, eine vergleichsweise große Wandstärke besitzen kann, um eine relativ große Kraftübertragung zwischen dem jeweiligen Schnapphaken und dem Grundkörper zu ermöglichen.

Entsprechend einer anderen vorteilhaften Weiterbildung können mehrere in der Umfangsrichtung verteilt angeordnete Schnapphaken vorgesehen sein, wobei in der Umfangsrichtung benachbarte Schnapphaken jeweils durch einen axialen Schlitz voneinander getrennt sind. Durch diese Schlitze wird die radiale federelastische Beweglichkeit der Rasthaken erheblich verbessert. Die Schlitze sind außerdem in der Umfangsrichtung so dimensioniert, dass es einfach möglich ist, sämtliche Rasthaken gleichzeitig nach innen zu verdrängen. Insbesondere lässt sich das Sicherungsbauteil so in den Grundkörper einstecken, dass sich die benachbarten Schnapphaken in der Umfangsrichtung nicht berühren bzw. nicht versperren. Hierdurch vereinfacht sich die Montage.

Eine erfindungsgemäße Frischluftanlage umfasst zumindest zwei Komponenten, durch die im Betrieb der Frischluftanlage Frischluft geführt wird, sowie zumindest eine Kupplungseinrichtung der vorstehend beschriebenen Art, um die beiden Komponenten miteinander zu verbinden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine vereinfachte Prinzipdarstellung einer Frischluftanlage für eine Brennkraftmaschine,
- Fig. 2: eine isometrische Ansicht von Einzelteilen einer Kupplungseinrichtung vor einer Montage,
- Fig. 3: eine isometrische Ansicht der Einzelteile der Kupplungseinrichtung in einem vorpositionierten Zustand,
- Fig. 4: eine isometrische Ansicht der Einzelteile der Kupplungseinrichtung in einem teilmontierten Zustand,
- Fig. 5: eine isometrische Ansicht der Einzelteile der Kupplungseinrichtung in einem vormontierten Zustand,
- Fig. 6: eine isometrische Ansicht der Kupplungseinrichtung vor einer Montage,
- Fig. 7: eine isometrische Ansicht der Kupplungseinrichtung in einem teilmontierten Zustand,
- Fig. 8: eine isometrische Ansicht der Kupplungseinrichtung in einem montierten Zustand,
- Fig. 9: eine isometrische Ansicht der Kupplungseinrichtung in einem teildemontierten Zustand,
- Fig. 10: ein Axialschnitt der Kupplungseinrichtung in einer Explosionsdarstellung, jedoch bei einer anderen Ausführungsform,
- Fig. 11: ein Axialschnitt der Kupplungseinrichtung aus Fig. 10 im montierten Zustand,
- Fig. 12: eine teilweise geschnittene, isometrische Ansicht der Kupplungseinrichtung bei einer weiteren Ausführungsform.

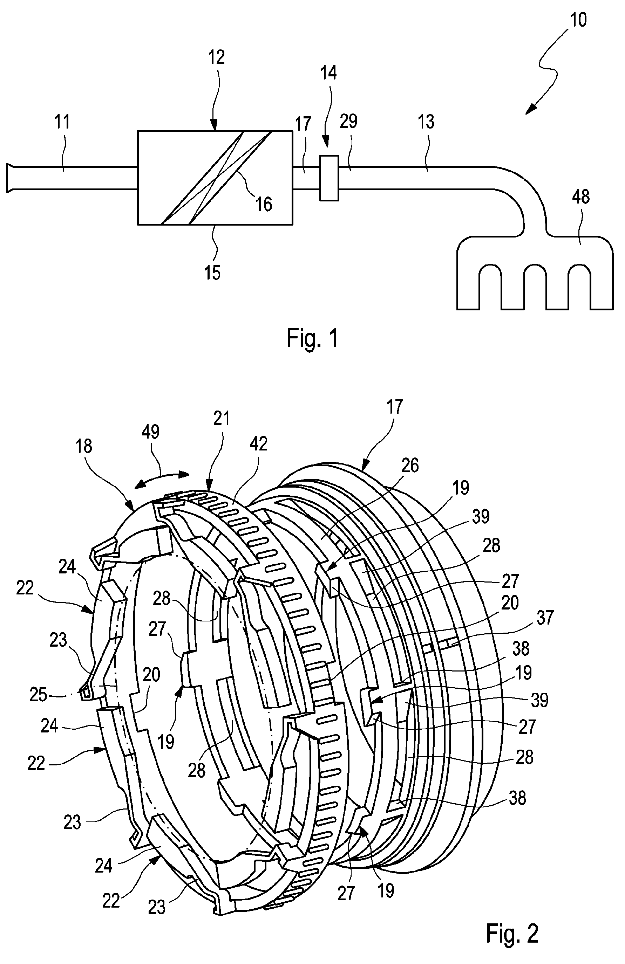

Entsprechend Figur 1 umfasst eine Frischluftanlage 10 zur Versorgung einer hier nicht dargestellten Brennkraftmaschine, die insbesondere in einem Kraftfahrzeug angeordnet sein kann, eine Rohluftleitung 11, eine Filtereinrichtung 12 und eine Reinluftleitung 13 sowie ein Saugmodul 48, hier in Form eines Frischluftverteilers. Im gezeigten Beispiel ist die Reinluftleitung 13 mittels einer Kupplungseinrichtung 14 mit der Filtereinrichtung 12 verbunden. Bei anderen Ausgestaltungen kann die Kupplungseinrichtung 14 auch zur Verbindung anderer luftführender Luftleitungen der Frischluftanlage 10, wie zum Beispiel von Blow-by-Gas-Leitungen, Sekundärluftleitungen oder Abgasrückführleitungen, mit einer anderen luftführenden Luftleitung vorgesehen sein. Beispielsweise kann auch die Rohluftleitung 11 mittels einer derartigen Kupplungseinrichtung 14 mit der Filtereinrichtung 12 verbunden sein. Generell können zwei beliebige Komponenten der Frischluftanlage 10 mittels einer derartigen Kupplungseinrichtung 14 fluidisch und mechanisch miteinander verbunden sein.

Beim vorliegenden Ausführungsbeispiel weist die Filtereinrichtung 12 ein Gehäuse 15 mit einem Filterelement 16 auf. An dem Gehäuse 15 ist ein Anschluss 17 angeordnet, welcher Teil der Kupplungseinrichtung 14 ist. Dieser Anschluss 17 ist fest mit dem Gehäuse 15 verbunden. Insbesondere kann der Anschluss 17 einstückig mit dem Gehäuse 15 ausgeführt sein. Hierbei kann der Anschluss 17 bei einem aus Kunststoff gebildeten Gehäuse 15 integral ausgeformt sein. Alternativ kann der Anschluss 17 nachträglich unlösbar mit dem Gehäuse 15 verbunden werden, insbesondere verschweißt oder verklebt. Der Anschluss 17 wirkt innerhalb der Kupplungseinrichtung 14 mit einem Stutzen 29 zusammen, der ebenfalls einen Bestandteil der Kupplungseinrichtung 14 bildet. Im Beispiel der Figur 1 ist dieser Stutzen 29 fest mit der Reinluftleitung 13 verbunden, insbesondere daran integral ausgeformt. Alternativ kann auch der Stutzen 29 an die Reinluftleitung 13 angebaut sein und damit fest und unlösbar verbunden sein. Ebenso ist eine umgekehrte Anordnung denkbar, bei welcher der Stutzen 29 am Gehäuse 15 angeordnet ist, während der Anschluss 17 an der Reinluftleitung 13 vorgesehen ist.

Nachfolgend wird anhand der Figuren 2 bis 12 näher auf Einzelheiten der Kupplungseinrichtung 14 eingegangen. Dabei sind die mit Hilfe der Kupplungseinrichtung 14 miteinander zu verbindenden Komponenten der Frischluftanlage 10 nicht dargestellt bzw. nur im Bereich der Bestandteile, die ebenfalls Bestandteile der Kupplungseinrichtung 14 bilden, nämlich der Stutzen 29 und der Anschluss 17.

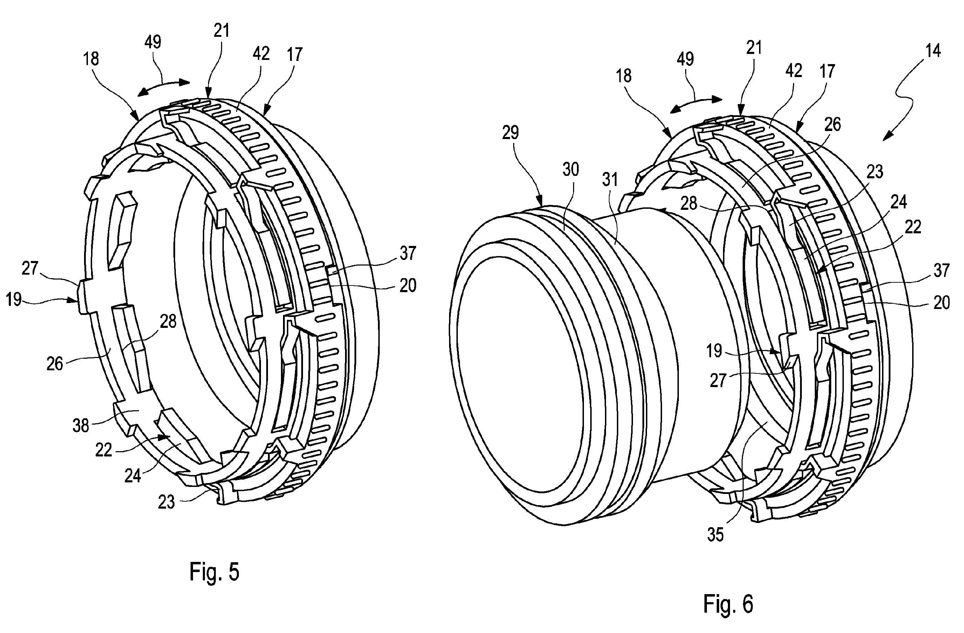

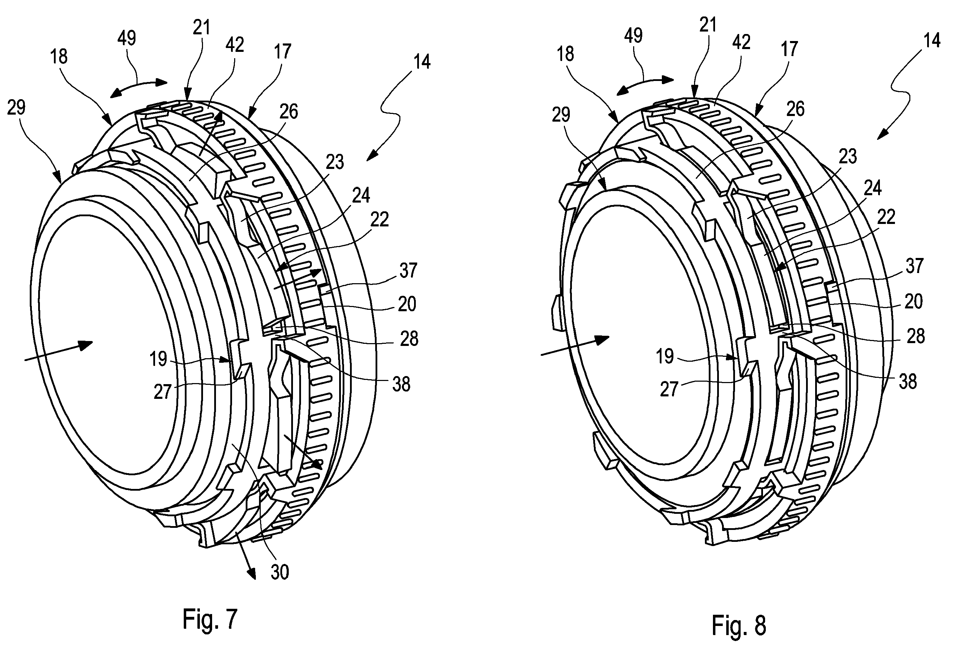

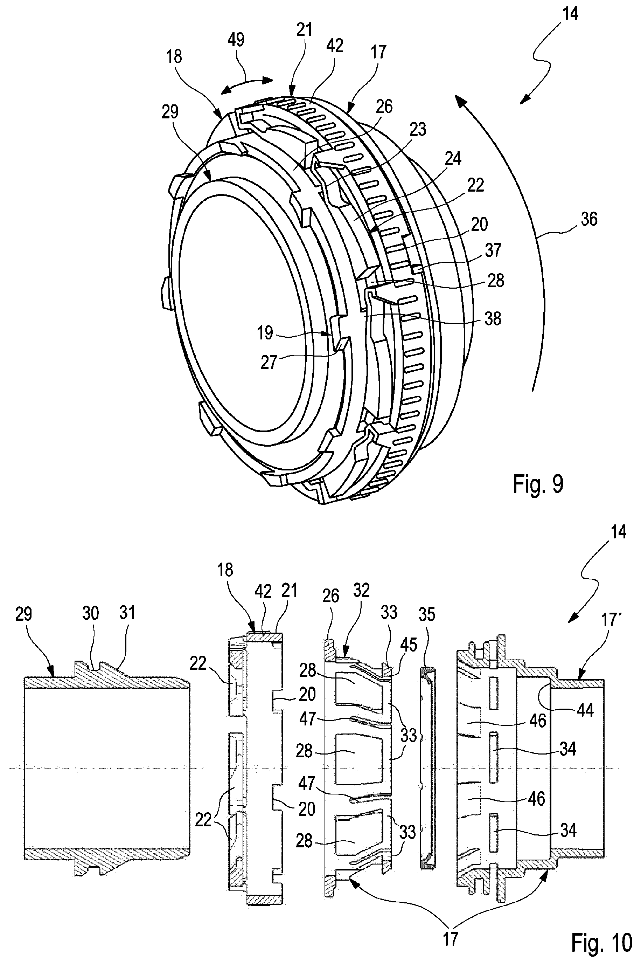

Die Kupplungseinrichtung 14 umfasst somit einen in den Figuren 2 bis 12 erkennbaren Anschluss 17 und einen in den Figuren 6 bis 12 gezeigten Stutzen 29, der axial in den Anschluss 17 einsteckbar ist. Der Anschluss 17 weist einen Rastring 18 auf, der in einer Umfangsrichtung 49 am Anschluss 17 verstellbar angeordnet ist, wobei der Rastring 18 zumindest zwischen einer in den Figuren 5, 6, 8, 11, 12 wiedergegebenen Sicherungsstellung und einer in den Figuren 7 und 9 wiedergegebenen Entsicherungsstellung verstellbar ist. Der Stutzen 29 weist eine außenliegende Sicherungsnut 30 auf, die in der Umfangsrichtung 49 geschlossen umläuft. Der Rastring 18 weist mehrere, in der Umfangsrichtung 49 verteilt angeordnete Rastelemente 22 auf, die radial federelastisch am Rastring 18 angeordnet sind. Der Anschluss 17 weist ferner einen Sicherungsring 26 auf, der in der Umfangsrichtung 49 geschlossen umläuft. Der Rastring 18 ist im montierten Zustand über die Rastelemente 22 durch den Sicherungsring 26 formschlüssig axial am Anschluss 17 fixiert. Im eingesteckten Zustand des Stutzens 29 und in der Sicherungsstellung des Rastrings 18 greifen die Rastelemente 22 radial in die Sicherungsnut 30 ein und sichern dadurch den Stutzen 29 in axialer Richtung gegen ein unbeabsichtigtes Herausziehen bzw. Lösen am Anschluss 17.

Das jeweilige Rastelement 22 weist einen Federbereich 23 und eine Rastnase 24 auf, wobei die jeweilige Rastnase 24 im eingesteckten Zustand des Stutzens 29 und in der Sicherungsstellung des Rastrings 18 in die Sicherungsnut 30 eingreift. Ferner ist die jeweilige Rastnase 24 über den Federbereich 23 radial federelastisch am Rastring 18 angeordnet. Der Anschluss 17 weist für jedes Rastelement 22 einen Rampenbereich 39 auf, der beim Verstellen des Rastrings 18 von der Sicherungsstellung in die Entsicherungsstellung mit dem zugehörigen Rastelement 22 zusammenwirkt und dieses dabei radial nach außen verdrängt, so dass der Stutzen 29 in der Entsicherungsstellung des Rastrings 18 vom jeweiligen Rastelement 22 frei kommt, da die Rastelemente 22 aus der Sicherungsnut 30 herausbewegt sind. In der Folge lässt sich der Stutzen 29 axial aus dem Anschluss 17 herausziehen.

Der Anschluss 17 weist für jedes Rastelement 22 ein radiales Rastfenster 28 auf, das axial vom Sicherungsring 26 begrenzt ist und in das das jeweilige Rastelement 22 radial eingreift. Zumindest in der Sicherungsstellung des Rastrings 18 greifen die Rastelemente 22 durch das jeweilige Rastfenster 28 hindurch in die Sicherungsnut 30 des Stutzens 29 ein, wodurch die Rastelemente 22 den Stutzen 29 axial mit dem Anschluss 17 verblocken.

Der Stutzen 29 weist gemäß den Figuren 6, 10 und 11 eine in der Umfangsrichtung 49 umlaufende Rampenkontur 31 auf, die beim Einstecken des Stutzens 29 der Sicherungsnut 30 vorausgeht. Beim Einstecken des Stutzens 29 wirkt die Rampenkontur 31 mit den Rastelementen 22 zusammen, derart, dass die Rampenkontur 31 die Rastelemente 22 radial nach außen verdrängt, wenn der Rastring 18 dabei seine Sicherungsstellung einnimmt. Sobald dann eine vorbestimmte Einstecktiefe für den Stutzen 29 im Anschluss 17 erreicht ist, sind die Rastelemente 22 radial fluchtend zur Sicherungsnut 30 ausgerichtet, so dass sie angetrieben durch die Federkraft selbsttätig radial nach innen in die Sicherungsnut 30 eingreifen.

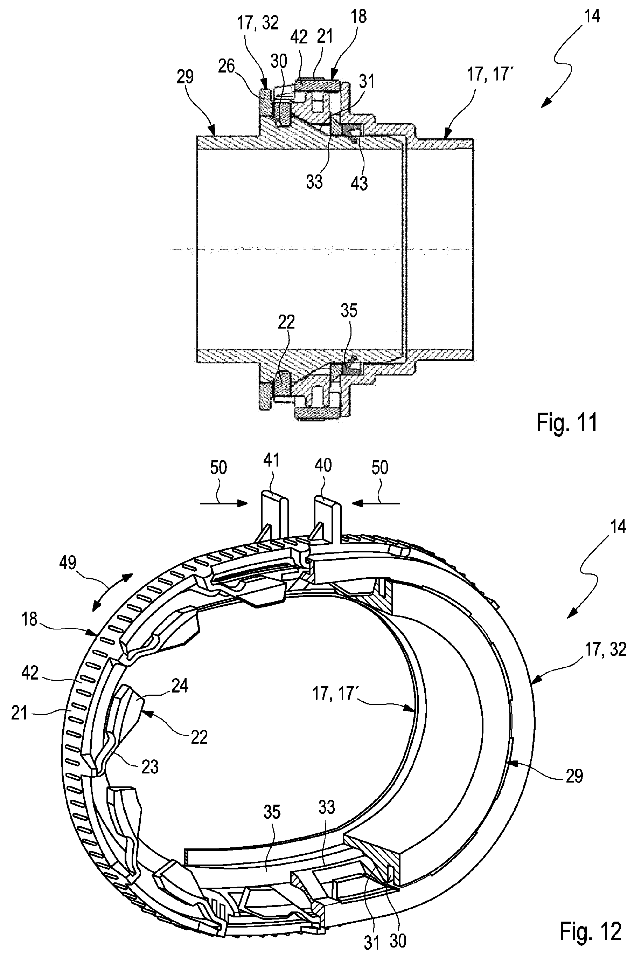

Der Rastring 18 kann gemäß Figur 12 ein radial abstehendes, manuell greifbares Antriebselement 40 aufweisen. Der Anschluss 17 weist ein radial abstehendes, manuell greifbares Widerlagerelement 41 auf. Das Antriebselement 40 und das Widerlagerelement 41 sind benachbart zueinander angeordnet, und zwar so, dass sie zumindest in der Sicherungsstellung des Rastrings 18 in der Umfangsrichtung 49 zueinander versetzt angeordnet sind. Dieser Versatz ist dabei so orientiert, dass das Antriebselement 40 und das Widerlagerelement 41 zum Verstellen des Rastrings 18 in seine Entsicherungsstellung entsprechend Pfeilen 50 aufeinander zu bewegt werden müssen. Bei der in Figur 12 gezeigten Ausführungsform bilden das Antriebselement 40 und das Widerlagerelement 41 eine Zwei-Finger-Betätigung für den Rastring 18, so dass für den jeweiligen Monteur mit Hilfe von zwei Fingern die Kupplungseinrichtung 14 gelöst werden kann.

Der Rastring 18 ist zweckmäßig mit einem bandförmigen Ringkörper 42 ausgestattet, der quer zur Umfangsrichtung 49 einen flachen Querschnitt aufweist. Hierdurch ist der Ringkörper 42 vergleichsweise elastisch bzw. flexibel. Am Ringkörper 42 sind dann die Rastelemente 22 federelastisch angeordnet, wobei sich die Rastelemente 22 zweckmäßig axial an den Ringkörper 42 anschließen. Gemäß den Figuren 2 bis 9 kann der Anschluss 17 an seiner Außenseite zumindest einen Verdrehanschlag 38 aufweisen. Dieser Verdrehanschlag 38 wirkt dabei mit einer am Rastring 18 ausgebildeten Aufnahme 20 zusammen, um die Verstellbarkeit des Rastrings 18 relativ zum Anschluss 17 zwischen der Sicherungsstellung und der Entsicherungsstellung zu begrenzen. Somit bilden die Sicherungsstellung und die Entsicherungsstellung jeweils eine Endstellung, zwischen denen der Rastring 18 relativ zum Anschluss 17 verdrehbar ist.

Bei den Ausführungsformen der Figuren 2 bis 9 ist der Sicherungsring 26 integral am Anschluss 17 ausgeformt. Im Unterschied dazu zeigen die Figuren 10 bis 12 andere Ausführungsformen, bei denen der Anschluss 17 ein separates Sicherungsbauteil 32 aufweist sowie einen Grundkörper 17', an den das Sicherungsbauteil 32 angebaut ist. Das Sicherungsbauteil 32 weist den Sicherungsring 26 auf. Bei den hier gezeigten Ausführungsformen weist das Sicherungsbauteil 32 auch die Rampenbereiche 39, die Rastfenster 28, das Widerlagerelement 41 und den Verdrehanschlag 38 auf.

Wie sich insbesondere den Figuren 10 und 11 entnehmen lässt, kann der Anschluss 17 radial innen eine Dichtungsaufnahme 43 aufweisen, die eine Radialdichtung 35 aufnimmt, die den eingesteckten Stutzen 29 radial gegenüber dem Anschluss 17 dichtet. Die Dichtungsaufnahme 43 ist radial und axial einerseits (in den Figuren 10 und 11 rechts) durch eine am Grundkörper 17' ausgebildete Ringstufe 44 begrenzt. Ferner ist die Dichtungsaufnahme 43 axial andererseits (in den Figuren 10 und 11 links) durch eine axiale Stirnseite 45 des Sicherungsbauteils 32 begrenzt. Hierdurch vereinfacht sich der Zusammenbau des Anschlusses 17, da es nunmehr möglich ist, die Radialdichtung 35 vor dem Anbauen des Sicherungsbauteils 32 am Grundkörper 17' zu montieren. Das Sicherungsbauteil 32 weist hier mehrere, in der Umfangsrichtung 49 verteilt angeordnete, radial federnde Schnapphaken 33 auf, die im angebauten Zustand jeweils in ein am Grundkörper 17' ausgebildetes Schnappfenster 34 radial nach außen eingreifen. Somit wird für die Montage des Anschlusses 17 das Sicherungsbauteil 32 in den Grundkörper 17' eingesteckt und über die Schnapphaken 33 damit verrastet. Dabei ist für jeden Schnapphaken 33 ein separates Schnappfenster 34 vorgesehen. Ferner sind in Figur 10 Einführschrägen 46 erkennbar, die der Grundkörper 17 für die Schnapphaken 33 aufweist. Dabei ist für jeden Schnapphaken 33 eine separate Einführschräge 46 vorgesehen. Beim axialen Stecken des Sicherungsbauteils 32 verdrängen die Einführschrägen 46 den jeweiligen Schnapphaken 33 radial nach innen. Wie sich Figur 10 weiter entnehmen lässt, sind die Einführschrägen 46 relativ zu den Schnappfenstern 34 in der Umfangsrichtung 49 versetzt angeordnet. Insbesondere befinden sich die Einführschrägen 46 jeweils etwa mittig zwischen benachbarten Schnappfenstern 34.

Die in der Umfangsrichtung 49 verteilt angeordneten Schnapphaken 33 weisen zwischen sich jeweils einen sich axial erstreckenden Schlitz 47 auf, der die in der Umfangsrichtung 49 benachbarten Schnapphaken 33 voneinander trennt.

In den Figuren 2 bis 5 ist eine Vormontage der Kupplungseinrichtung 14 wiedergegeben. Für die Vormontage der Kupplungseinrichtung 14 wird der Rastring 18 derart vor dem Anschluss 17 positioniert, dass Montagenasen 19, die am Umfang des Anschlusses 17 verteilt angeordnet sind, axial fluchtend zu den Federbereichen 23 ausgerichtet sind. Des Weiteren sind die Aussparungen 20 auf den jeweiligen Verdrehanschlag 37 ausgerichtet. Zweckmäßig ist für jedes Rastelement 22 eine separate Montagenase 19 vorgesehen. Der Rastring 18 weist einen Griffbereich 21 auf, der über eine haptisch griffig ausgebildete, ringförmig umlaufende Greiffläche verfügt, die hier am Ringkörper 42 ausgeformt ist. Wie erwähnt befinden sich am Rastring 18 mehrere am Umfang verteilt angeordnete Rastelemente 22, die jeweils über einen Federbereich 23 und eine Rastnase 24 verfügen. Im entspannten Zustand ragen die Rastnasen 24 radial nach innen, wobei sie einen inneren Teilkreis 25 bilden. Der innere Teilkreis 25 verfügt über einen geringeren Durchmesser als der Griffbereich 21 bzw. der Ringkörper 42.

Der am Anschluss 17 angeordnete Sicherungsring 26 ist in axialer Richtung, also in der Einsteckrichtung des Stutzens 29 hinter den Montagenasen 19 angeordnet. Im Beispiel stehen die Montagenasen 19 axial vom Sicherungsring 26 ab. Die Montagenasen 19 und der Sicherungsring 26 verfügen über den gleichen Innendurchmesser. Der Außendurchmesser des Sicherungsrings 26 entspricht teilweise auch dem Außendurchmesser der Montagenasen 19. Allerdings sind die Montagenasen 19 hier jeweils mit einem Rampenbereich 27 ausgestattet, der einen, z.B. stetigen, Anstieg von dem inneren Durchmesser zu dem äußeren Durchmesser bildet. An dem Sicherungsring 26 schließen in axialer Richtung, also wieder in der Einsteckrichtung des Stutzens 29 die Rastfenster 28 an, durch welche die Rastnasen 24 im montierten Zustand hindurchgreifen können.

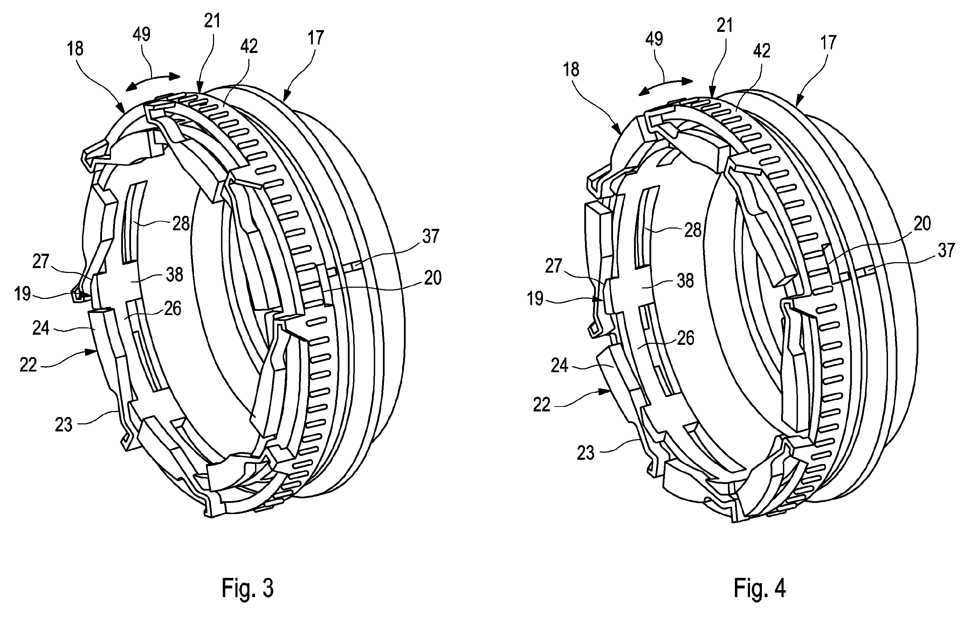

Der gemäß Figur 3 zur Vormontage auf den Anschluss 17 aufgesteckte Rastring 18 liegt mit den Rastnasen 24 axial am Sicherungsring 26 an. Zur weiteren Vormontage wird der Rastring 18 entgegen dem Uhrzeigersinn gedreht, wobei die Rastnasen 24 auf den Rampenbereichen 27 der Montagenasen 19 gleiten und nach radial außen gedrückt werden. Die Rastnasen 24 federn bis zum gleichen Durchmesser des Sicherungsrings 26 auf, was in Figur 4 dargestellt ist. Anschließend können die Rastnasen 24 axial über den Sicherungsring 26 geschoben werden. Nachdem die Rastnasen 24 den Sicherungsring 26 überquert haben, können die Rastnasen 24 in die Rastfenster 28 eingreifen und federn so wieder radial nach innen. Dieser teilmontierte Zustand ist in Figur 5 dargestellt.

In die teilmontierte Kupplungseinrichtung 14 wird dann der zu verbindende Stutzen 29 der jeweiligen Komponente der Frischluftanlage 10 eingeschoben. Hierbei kann der Stutzen 29 wie erwähnt materialeinheitlich an die jeweilige Komponente bzw. an die jeweilige Leitung, hier die Reinluftleitung 13, angeformt oder nachträglich daran angebracht sein. Hierzu eignen sich beispielsweise Verfahren wie Kleben, Schweißen oder Aufschrumpfen. Der Stutzen 29 verfügt wie erwähnt außen über eine ringförmig umlaufende Sicherungsnut 30, die in Montagerichtung axial hinter der ebenfalls ringförmig umlaufenden Rampenkontur 31 angeordnet ist. Durch das Einführen des Stutzens 29 in den Anschluss 17 gleiten die Rastnasen 24 auf der Rampenkontur 31 und werden dabei radial nach außen gedrückt, was in Figur 7 durch Pfeile angedeutet ist. Die Verdrängung der Rastnasen 24 radial nach außen erfolgt solange, bis sie einen äußersten Punkt erreicht haben. Durch weiteres Einführen des Stutzens 29 gelangen die Rastnasen 24 dann in den Bereich der Sicherungsnut 30. Dann rasten die Rastnasen 24 in die Sicherungsnut 30 ein, wobei sie durch den jeweiligen Federbereich 23 radial nach innen angetrieben sind. Hierdurch wird eine Formschlussverbindung erzeugt, die ein ungewolltes axiales Lösen der Verbindung zwischen Stutzen 29 und Anschluss 17 in der Kupplungseinrichtung 14 verhindert.

Die Figuren 10 bis 12 zeigen alternative Ausgestaltungen der Kupplungseinrichtung 14 im Schnitt bzw. Teilschnitt. Diese Ausgestaltungen unterscheiden sich von der vorgenannten Ausführungsform gemäß der Figuren 2 bis 9 dadurch, dass der Anschluss 17 zweiteilig ausgeführt ist und hierzu das Sicherungsbauteil 32 und den Grundkörper 17' aufweist. Durch diese Zweiteiligkeit wird erreicht, dass die einzelnen Komponenten des Anschlusses 17 geometrisch einfacher gestaltet werden können, wodurch der Anschluss 17 mit einfacheren Werkzeugen ohne Hinterschnitt oder Zerfallskern als Spritzgussteil hergestellt werden kann. Der Sicherungsring 26 ist am separat ausgeführten Sicherungsbauteil 32 ausgebildet, das über Schnapphaken 33 mit dem Grundkörper 17' verbunden ist. Hierzu greifen die Schnapphaken 33 in Schnappfenster 34 ein, die vorzugsweise in gleicher Anzahl wie die Schnapphaken 33 vorhanden sind. Die Schnapphaken 33 sind elastisch federnd mit dem Sicherungsring 26 verbunden, wobei eine spielfreie Montage in dem Anschluss 17 bzw. im Grundkörper 17' erfolgt. Ein weiterer Vorteil dieser Ausgestaltung ist die einfachere Montage der Radialdichtung 35, die ohne Hinterschnitt in dem Grundkörper 17' eingelegt werden kann. Die axiale Stirnseite 45 des Sicherungsbauteils 32, welche die Dichtungsaufnahme 43 verschließt, ist durch die freien Enden der Schnapphaken 33 gebildet.

Auch bei der in den Figuren 2 bis 9 gezeigten Ausführungsform ist eine Dichtungsaufnahme 43 vorhanden, in die eine Radialdichtung 35 eingesetzt ist.

Weiterhin unterscheiden sich die Ausführungen der Figuren 10 bis 12 von der Variante der Figuren 2 bis 9 dadurch, dass der Rastring 18 vor der Montage des Sicherungsbauteils 32 auf den Grundkörper 17' aufgebracht werden kann. Der Rastring 18 wird zur Montage auf den Grundkörper 17' aufgesteckt. Anschließend wird das Sicherungsbauteil 32 relativ zum Grundkörper 17 entsprechend ausgerichtet und anschließend in den Grundkörper 17 axial eingedrückt und gegebenenfalls in der Umfangsrichtung 49 verdreht, bis die Schnapphaken 33 in die Schnappfenster 34 eingreifen. Somit ist der Rastring 18 verliersicher am Anschluss 17 angeordnet. In den übrigen Merkmalen oder Eigenschaften stimmen die unterschiedlichen Ausführungsformen weitgehend miteinander überein. Des Weiteren ist es bei der zweiteiligen Ausführung des Anschlusses 17 auch möglich, den Rastring 18 vorab am Sicherungsbauteil 32 zu montieren, quasi um eine vormontierbare Einheit zu bilden, die dann als Einheit im Grundkörper 17' anbringbar ist.

Zur Demontage der Verbindung bzw. zum Lösen der Kupplungseinrichtung 14 wird der Rastring 18 in einer Pfeilrichtung 36 gemäß Figur 9 gedreht, bis der Rastring 18 mit seiner Aussparung 20 am Verdrehanschlag 37 anstößt. Durch die Drehung des Rastrings 18 gleiten die Rastnasen 24 auf Rippen 38 radial nach außen, wozu die Rippen 38 mit den Rampenbereichen 39 ausgestattet sind. Diese Bewegung der Rastnasen 24 erfolgt analog zu der Vormontage des Rastrings 18 auf dem Anschluss 17, wie gemäß den Figuren 2 bis 5 beschrieben, nur dass zur radialen Bewegung der Rastnasen 24 anstelle der Montagenasen 19 nunmehr die Rippen 38 verwendet werden. Wie erwähnt weisen auch die Rippen 38 zu den Rampenbereichen 27 der Montagenasen 19 ähnliche Rampenbereiche 39 auf.

In der in Figur 9 gezeigten Drehlage, also in der Entsicherungsstellung des Rastrings 18, ragen die Rastnasen 24 nicht mehr in die Sicherungsnut 30 ein. Daher kann der Stutzen 29 nunmehr axial aus dem Anschluss 17 herausgezogen werden.

## Patentansprüche

1. Kupplungseinrichtung (14) zur Verbindung von luftführenden Komponenten einer Frischluftanlage (10) für eine Brennkraftmaschine, insbesondere eines Kraftfahrzeugs,
- mit einem Anschluss (17), der einen daran zumindest zwischen einer Sicherungsstellung und einer Entsicherungsstellung in der Umfangsrichtung (49) verstellbar angeordneten Rastring (18) aufweist,
- mit einem in den Anschluss (17) axial einsteckbaren Stutzen (29), der eine außenliegende Sicherungsnut (30) aufweist,
- wobei der Rastring (18) wenigstens ein Rastelement (22) aufweist, das radial federelastisch am Rastring (18) angeordnet ist,
- wobei der Anschluss (17) einen Sicherungsring (26) aufweist,
- wobei der Rastring (18) über das jeweilige Rastelement (22) durch den Sicherungsring (26) axial am Anschluss (17) fixiert ist,
- wobei im eingesteckten Zustand des Stutzens (29) und in der Sicherungsstellung des Rastrings (18) das jeweilige Rastelement (22) radial in die Sicherungsnut (30) eingreift und so den Stutzen (29) in axialer Richtung gegen ein unbeabsichtigtes Lösen am Anschluss (17) sichert.

2. Kupplungseinrichtung nach Anspruch 1,
**dadurch gekennzeichnet,**
**dass** das jeweilige Rastelement (22) einen Federbereich (23) und eine Rastnase (24) aufweist, wobei die Rastnase (24) im eingesteckten Zustand des Stutzens (29) und in der Sicherungsstellung des Rastrings (18) in die Sicherungsnut (30) eingreift und über den Federbereich (23) radial federelastisch am Rastring (18) angeordnet ist.

3. Kupplungseinrichtung nach Anspruch 1 oder 2,
**dadurch gekennzeichnet,**
**dass** der Anschluss (17) wenigstens einen Rampenbereich (39) aufweist, der beim Verstellen des Rastrings (18) von der Sicherungsstellung in die Entsicherungsstellung mit dem jeweiligen Rastelement (22) zusammenwirkt und dieses radial nach außen verdrängt, so dass der Stutzen (29) in der Entsicherungsstellung des Rastrings (18) vom jeweiligen Rastelement (22) freikommt und axial aus dem Anschluss (17) herausziehbar ist.

4. Kupplungseinrichtung nach einem der Ansprüche 1 bis 3,
**dadurch gekennzeichnet,**
**dass** der Anschluss (17) wenigstens ein radiales Rastfenster (28) aufweist, durch welches axial vom Sicherungsring (26) begrenzt ist und in welches das jeweilige Rastelement (22) radial eingreift.

5. Kupplungseinrichtung nach einem der Ansprüche 1 bis 4,
**dadurch gekennzeichnet,**
**dass** der Stutzen (29) eine Rampenkontur (31) aufweist, die beim Einstecken des Stutzens (29) der Sicherungsnut (30) vorausgeht und mit dem jeweiligen Rastelement (22) zusammenwirkt und dieses radial nach außen verdrängt, wenn der Rastring (18) in seine Sicherungsstellung verstellt ist.

6. Kupplungseinrichtung nach einem der Ansprüche 1 bis 5,
**dadurch gekennzeichnet,**
- **dass** der Rastring (18) ein radial abstehendes, manuell greifbares Antriebselement (40) aufweist,
- **dass** der Anschluss (17) ein radial abstehendes, manuell greifbares Widerlagerelement (41) aufweist,
- **dass** das Antriebselement (40) und das Widerlagerelement (41) benachbart zueinander angeordnet sind und zumindest in der Sicherungsstellung des Rastrings (18) in der Umfangsrichtung (49) voneinander versetzt angeordnet sind, derart, dass sie zum Verstellen des Rastrings (18) in die Entsicherungsstellung aufeinander zu bewegt werden.

7. Kupplungseinrichtung nach einem der Ansprüche 1 bis 6,
**dadurch gekennzeichnet,**
**dass** der Rastring (18) einen bandförmigen Ringkörper (42) aufweist, der quer zur Umfangsrichtung (49) einen flachen Querschnitt aufweist und an dem das jeweilige Rastelement (22) federelastisch angeordnet ist.

8. Kupplungseinrichtung nach einem der Ansprüche 1 bis 7,
**dadurch gekennzeichnet,**
**dass** der Anschluss (17) außen wenigstens einen Verdrehanschlag (37) aufweist, der mit einer am Rastring (18) ausgebildeten Aufnahme (20) zum Begrenzen der Verstellbarkeit des Rastrings (18) zwischen der Sicherungsstellung und der Entsicherungsstellung zusammenwirkt.

9. Kupplungseinrichtung nach einem der Ansprüche 1 bis 8,
**dadurch gekennzeichnet,**
**dass** der Anschluss (17) ein separates Sicherungsbauteil (32) aufweist, das an einen Grundkörper (17') angebaut ist und das den Sicherungsring (18) aufweist.

10. Kupplungseinrichtung nach Anspruch 9,
**dadurch gekennzeichnet,**
- **dass** der jeweilige Rampenbereich (39) nach Anspruch 3 am Sicherungsbauteil (32) ausgebildet ist, und/oder
- **dass** das jeweilige Rastfenster (28) nach Anspruch 4 am Sicherungsbauteil (32) ausgebildet ist, und/oder
- **dass** das Widerlagerelement (41) nach Anspruch 6 am Sicherungsbauteil (32) ausgebildet ist, und/oder
- **dass** der Verdrehanschlag (37) nach Anspruch 8 am Sicherungsbauteil (32) ausgebildet ist.

11. Kupplungseinrichtung nach Anspruch 9 oder 10,
**dadurch gekennzeichnet,**
- **dass** der Anschluss (17) radial innen eine Dichtungsaufnahme (43) aufweist, die eine den eingesteckten Stutzen (29) radial gegenüber dem Anschluss (17) dichtende Radialdichtung (35) aufnimmt,
- **dass** die Dichtungsaufnahme (43) radial und axial einerseits durch eine am Grundkörper (17') ausgebildete Ringstufe (44) begrenzt ist,
- **dass** die Dichtungsaufnahme (43) axial andererseits durch eine axiale Stirnseite (45) des Sicherungsbauteils (32) begrenzt ist.

12. Kupplungseinrichtung nach einem der Ansprüche 9 bis 11,
**dadurch gekennzeichnet,**
**dass** das Sicherungsbauteil (32) wenigstens einen radial federnden Schnapphaken (33) aufweist, der im angebauten Zustand in ein am Grundkörper (17') ausgebildetes Schnappfenster (34) radial nach außen eingreift.

13. Kupplungseinrichtung nach Anspruch 12,
**dadurch gekennzeichnet,**
**dass** der Grundkörper (17') für den jeweiligen Schnapphaken (33) eine Einführschräge (46) aufweist, die beim axialen Stecken des Sicherungsbauteils (32) den jeweiligen Schnapphaken (33) radial nach innen verdrängt, wobei die jeweilige Einfüllschräge (46) relativ zum zugehörigen Schnappfenster (34) in der Umfangsrichtung (49) versetzt angeordnet ist.

14. Kupplungseinrichtung nach Anspruch 12 oder 13,
**dadurch gekennzeichnet,**
**dass** mehrere in der Umfangsrichtung (49) verteilt angeordnete Schnapphaken (33) vorgesehen sind, wobei in der Umfangsrichtung (49) benachbarte Schnapphaken (33) jeweils durch einen axialen Schlitz (47) voneinander getrennt sind.

15. Frischluftanlage (10) für eine Brennkraftmaschine, insbesondere in einem Kraftfahrzeug,
- mit wenigstens zwei Komponenten (11, 12, 13, 48) zum Führen von Frischluft,
- mit wenigstens einer Kupplungseinrichtung (14) nach einem der Ansprüche 1 bis 14 zum Verbinden der beiden Komponenten (11, 12, 13, 48).

## Claims

1. A coupling device (14) for connecting air-conducting components of a fresh air system (10) for an internal combustion engine, in particular of a motor vehicle,
- having a connector (17), which has a locking ring (18), which is arranged thereon such that it can be moved in the circumferential direction (49) at least between a securing position and a releasing position,
- having a connecting piece (29), which can be inserted axially into the connector (17) and has an outer securing groove (30),
- wherein the locking ring (18) has at least one locking element (22), which is arranged in a radially resilient manner on the locking ring (18),
- wherein the connector (17) has a securing ring (26),
- wherein the locking ring (18) is fixed axially to the connector (17) by the securing ring (26), by means of the respective locking element (22),
- wherein, when the connecting piece (29) is in the inserted state and the locking ring (18) is in the securing position, the respective locking element (22) engages radially into the securing groove (30) and thereby secures the connecting piece (29) on the connector (17) in the axial direction against being unintentionally detached.

2. The coupling device according to Claim 1,
**characterised in that**
the respective locking element (22) has a resilient region (23) and a locking nose (24), wherein the locking nose (24) engages into the securing groove (30) and is arranged on the locking ring (18) in a radially resilient manner by means of the resilient region (23) when the connecting piece (29) is inserted and the locking ring (18) is in the securing position.

3. The coupling device according to Claim 1 or 2,
**characterised in that**
the connector (17) has at least one ramp region (39), which interacts with the respective locking element (22) and pushes it radially outwards when the locking ring (18) is moved from the securing position to the releasing position, so that the connecting piece (29) is released from the respective locking element (22) and can be pulled axially out of the connector (17) when the locking ring (18) is in the releasing position.

4. The coupling device according to any one of Claims 1 to 3,
**characterised in that**
the connector (17) has at least one radial locking window (28), which is delimited axially by the securing ring (26) and into which the respective locking element (22) radially engages.

5. The coupling device according to any one of Claims 1 to 4,
**characterised in that**
the connecting piece (29) has a ramp contour (31), which precedes the securing groove (30) when the connecting piece (29) is inserted, and interacts with the respective locking element (22) and pushes it radially outwards when the locking ring (18) is moved into its securing position.

6. The coupling device according to any one of Claims 1 to 5,
**characterised in that**
- the locking ring (18) has a radially protruding drive element (40) that can be grasped manually,
- the connector (17) has a radially protruding abutment element (41) that can be grasped manually,
- the drive element (40) and the abutment element (41) are arranged adjacently to each other and are arranged offset to each other in the circumferential direction (49), at least when the locking ring (18) is in the securing position, in such a manner that they are moved towards each other in order to move the locking ring (18) into the releasing position.

7. The coupling device according to any one of Claims 1 to 6,
**characterised in that**
the locking ring (18) has a strip-shaped ring body (42), which has a flat cross section transverse to the circumferential direction (49) and on which the respective locking element (22) is arranged in a resilient manner.

8. The coupling device according to any one of Claims 1 to 7,
**characterised in that**
the connector (17) has on its outside at least one rotation stop (37), which interacts with a receptacle (20) formed on the locking ring (18) to limit the mobility of the locking ring (18) between the securing position and the releasing position.

9. The coupling device according to any one of Claims 1 to 8,
**characterised in that**
the connector (17) has a separate securing part (32), which is attached to a main body (17') and has the securing ring (18).

10. The coupling device according to Claim 9,
**characterised in that**
- the respective ramp region (39) according to Claim 3 is formed on the securing part (32), and/or
- the respective locking window (28) according to Claim 4 is formed on the securing part (32), and/or
- the abutment element (41) according to Claim 6 is formed on the securing part (32), and/or
- the rotation stop (37) according to Claim 8 is formed on the securing part (32).

11. The coupling device according to Claim 9 or 10,
**characterised in that**
- the connector (17) has on the radial inside a seal receptacle (43), which accommodates a radial seal (35), which seals off the inserted connecting piece (29) radially from the connector (17),
- the seal receptacle (43) is delimited radially and axially on one side by an annular step (44) formed on the main body (17'),
- the seal receptacle (43) is delimited axially on the other side by an axial end face (45) of the securing part (32).

12. The coupling device according to any one of Claims 9 to 11,
**characterised in that**
the securing part (32) has at least one radially resilient snap hook (33), which engages radially outwards into a snap window (34) formed on the main body (17') when in the attached state.

13. The coupling device according to Claim 12, **characterised in that**
the main body (17') has an introduction slope (46) for the respective snap hook (33), which introduction slope pushes the respective snap hook (33) radially inwards when the securing part (32) is axially inserted, wherein the respective introduction slope (46) is arranged offset in the circumferential direction (49) relative to the associated snap window (34).

14. The coupling device according to Claim 12 or 13,
**characterised in that**
a plurality of snap hooks (33) arranged distributed in the circumferential direction (49) is provided, wherein snap hooks (33) that are adjacent in the circumferential direction (49) are each separated from each other by an axial slot (47).

15. A fresh air system (10) for an internal combustion engine, in particular in a motor vehicle,
- having at least two components (11, 12, 13, 48) for conducting fresh air,
- having at least one coupling device (14) according to any one of Claims 1 to 14 for connecting the two components (11, 12, 13, 48).

## Revendications

1. Dispositif de couplage (14) pour raccorder des composants acheminant de l'air d'une installation d'air frais (10) pour un moteur à combustion interne, en particulier d'un véhicule automobile,
- avec un raccord (17), qui présente une bague d'enclenchement (18) disposée sur ce dernier de manière à pouvoir être ajustée dans la direction périphérique (49) entre une position de blocage et une position de déblocage,
- avec une tubulure (29) pouvant être emboîtée de manière axiale dans le raccord (17), laquelle présente une rainure de blocage (30) située à l'extérieur,
- dans lequel la bague d'enclenchement (18) présente au moins un élément d'enclenchement (22), qui est disposé de manière radialement élastique sur ressorts au niveau de la bague d'enclenchement (18),
- dans lequel le raccord (17) présente une bague de blocage (26),
- dans lequel la bague d'enclenchement (18) est fixée de manière axiale au niveau du raccord (17) à travers la bague de blocage (26) par l'intermédiaire de l'élément d'enclenchement (22) respectif,
- dans lequel l'élément d'enclenchement (22) respectif vient en prise de manière radiale avec la rainure de blocage (30) et bloque ainsi au niveau du raccord (17) la tubulure (29) dans une direction axiale l'empêchant de se détacher de manière accidentelle dans l'état emboîté de la tubulure (29) et dans la position de blocage de la bague d'enclenchement (18).

2. Dispositif de couplage selon la revendication 1,
**caractérisé en ce**
**que** l'élément d'enclenchement (22) respectif présente une zone de ressorts (23) et un ergot d'enclenchement (24), dans lequel l'ergot d'enclenchement (24) vient en prise avec la rainure de blocage (30) dans l'état emboîté de la tubulure (29) et dans la position de blocage de la bague d'enclenchement (18) et est disposé de manière radialement élastique sur ressorts au niveau de la bague d'enclenchement (18) au-dessus de la zone de ressorts (23).

3. Dispositif de couplage selon la revendication 1 ou 2,
**caractérisé en ce**
**que** le raccord (17) présente au moins une zone de rampe (39), qui coopère avec l'élément d'enclenchement (22) respectif lors de l'ajustement de la bague d'enclenchement (18) de la position de blocage dans la position de déblocage et qui le repousse de manière radiale vers l'extérieur si bien que la tubulure (29) se libère de l'élément d'enclenchement (22) respectif dans la position de déblocage de la bague d'enclenchement (18) et peut être retirée de manière axiale hors du raccord (17).

4. Dispositif de couplage selon l'une quelconque des revendications 1 à 3,
**caractérisé en ce**
**que** le raccord (17) présente au moins une fenêtre d'enclenchement (28) radiale, laquelle est délimitée de manière axiale par la bague de blocage (26) et avec laquelle l'élément d'enclenchement (22) respectif vient en prise de manière radiale.

5. Dispositif de couplage selon l'une quelconque des revendications 1 à 4,
**caractérisé en ce**
**que** la tubulure (29) présente un contour de rampe (31), qui précède la rainure de blocage (30) lors de l'emboîtement de la tubulure (29) et qui coopère avec l'élément d'enclenchement (22) respectif et qui repousse ce dernier de manière radiale vers l'extérieur quand la bague d'enclenchement (18) est ajustée dans sa position de blocage.

6. Dispositif de couplage selon l'une quelconque des revendications 1 à 5,
**caractérisé en ce**
- **que** la bague d'enclenchement (18) présente un élément d'entraînement (40) dépassant de manière radiale, pouvant être saisi manuellement,
- **que** le raccord (17) présente un élément de contre-palier (41) dépassant de manière radiale, pouvant être saisi manuellement,
- **que** l'élément d'entraînement (40) et l'élément de contre-palier (41) sont disposés de manière adjacente l'un par rapport à l'autre et sont disposés de manière décalée l'un de l'autre dans la direction périphérique (49) au moins dans la position de blocage de la bague d'enclenchement (18) de telle manière qu'ils sont déplacés l'un vers l'autre afin d'ajuster la bague d'enclenchement (18) dans la position de déblocage.

7. Dispositif de couplage selon l'une quelconque des revendications 1 à 6,
**caractérisé en ce**
**que** la bague d'enclenchement (18) présente un corps de bague (42) en forme de bande, qui présente une section transversale plate de manière transversale par rapport à la direction périphérique (49) et au niveau duquel l'élément d'enclenchement (22) respectif est disposé de manière élastique sur ressorts.

8. Dispositif de couplage selon l'une quelconque des revendications 1 à 7,
**caractérisé en ce**
**que** le raccord (17) présente côté extérieur au moins une butée de rotation (37), qui coopère avec un logement (20) réalisé au niveau de la bague d'enclenchement (18), pour délimiter la possibilité d'ajustement de la bague d'enclenchement (18) entre la position de blocage et la position de déblocage.

9. Dispositif de couplage selon l'une quelconque des revendications 1 à 8,
**caractérisé en ce**
**que** le raccord (17) présente un composant de blocage (32) séparé, qui est installé au niveau d'un corps de base (17') et qui présente la bague de blocage (18).

10. Dispositif de couplage selon la revendication 9,
**caractérisé en ce**
- **que** la zone de rampe (39) respective selon la revendication 3 est réalisée au niveau du composant de blocage (32), et/ou
- **que** la fenêtre d'enclenchement (28) respective selon la revendication 4 est réalisée au niveau du composant de blocage (32), et/ou
- **que** l'élément de contre-palier (41) selon la revendication 6 est réalisé au niveau du composant de blocage (32), et/ou
- **que** la butée de rotation (37) selon la revendication 8 est réalisée au niveau du composant de blocage (32).

11. Dispositif de couplage selon la revendication 9 ou 10,
**caractérisé en ce**
- **que** le raccord (17) présente radialement à l'intérieur un logement d'étanchéité (43), qui loge un joint d'étanchéité radial (35) assurant l'étanchéité de la tubulure (29) emboîtée de manière radiale par rapport au raccord (17),
- **que** le logement d'étanchéité (43) est délimité de manière radiale et de manière axiale d'une part par un palier de bague (44) réalisé au niveau du corps de base (17'),
- **que** le logement d'étanchéité (43) est délimité de manière axiale d'autre part par un côté frontal (45) axial du composant de blocage (32).

12. Dispositif de couplage selon l'une quelconque des revendications 9 à 11,
**caractérisé en ce**
**que** le composant de blocage (32) présente au moins un crochet d'encliquetage (33) radialement sur ressorts, qui vient en prise, dans l'état monté, de manière radiale vers l'extérieur avec une fenêtre d'encliquetage (34) réalisée au niveau du corps de base (17').

13. Dispositif de couplage selon la revendication 12,
**caractérisé en ce**
**que** le corps de base (17') présente pour le crochet d'encliquetage (33) respectif, un biseau d'introduction (46), qui repousse, lors de l'enfichage axial du composant de bocage (32), le crochet d'encliquetage (33) respectif de manière radiale vers l'intérieur, dans lequel le biseau d'introduction (46) respectif est disposé de manière décalée dans la direction périphérique (49) par rapport à la fenêtre d'encliquetage (34) associée.

14. Dispositif de couplage selon la revendication 12 ou 13,
**caractérisé en ce**
**que** plusieurs crochets d'encliquetage (33) disposés de manière répartie dans la direction périphérique (49) sont prévus, dans lequel des crochets d'encliquetage (33) adjacents dans la direction périphérique (49) sont séparés les uns des autres respectivement par une entaille (47) axiale.

15. Installation d'air frais (10) pour un moteur à combustion interne, en particulier dans un véhicule automobile,
- avec au moins deux composants (11, 12, 13, 48) pour guider de l'air frais,
- avec au moins un dispositif de couplage (14) selon l'une quelconque des revendications 1 à 14 pour raccorder les deux composants (11, 12, 13, 48).
